(19) Europäisches Patentamt
European Patent Office
Office européen des brevets

(11) Publication number: **0 004 747**
**B1**

# (12) EUROPEAN PATENT SPECIFICATION

(45) Date of publication of patent specification: **02.06.82**

(51) Int. Cl.[3]: **C 07 F 9/09,** C 08 K 5/52, C 08 L 75/04

(21) Application number: **79300510.9**

(22) Date of filing: **29.03.79**

## (54) Processes for the preparation of oligomeric phosphates ester compositions.

(30) Priority: **03.04.78 US 892550**

(43) Date of publication of application:
**17.10.79 Bulletin 79/21**

(45) Publication of the grant of the patent:
**02.06.82 Bulletin 82/22**

(84) Designated Contracting States:
**BE CH DE FR GB IT NL SE**

(56) References cited:
DE - B - 1 202 501
GB - A - 1 158 544
US - A - 3 817 881
US - A - 3 896 187
US - A - 3 867 320
US - A - 4 097 559

CHEMICAL ABSTRACTS, vol. 82, no. 2, 13 January 1975, page 5, abstract 4662h Columbus, Ohio USA
SCHER P. et al: "Polymer products formed when dimethyl methylphosphonate reacts with phosphorus pentoxide."

(73) Proprietor: **STAUFFER CHEMICAL COMPANY**
**Westport Connecticut 06880 (US)**

(72) Inventor: **Hardy, Thomas Archer**
**6 Bliss Terrace**
**Monroe New York 10950 (US)**
Inventor: **Jaffe, Fred**
**130 Edgewood Road**
**Ossining New York 10562 (US)**

(74) Representative: **Smith, Sydney et al,**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

Processes for the prep:.ation of oligomeric phosphate ester compositions

The present invention relates to methods for the production of oligomeric phosphate ester compositions which are mixtures of oligomers which have flame retardant properties.

Oligomeric phosphate esters are known and are described in U.S. Patent No. 3,767,732. The '732 patent discloses compositions having the structural formula:

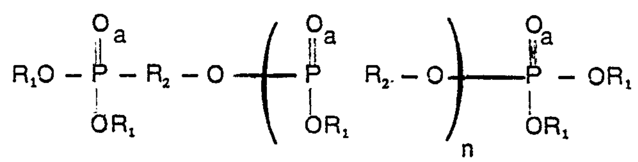

wherein a stands for 1 or 0, n stands for a number between 0 and 4, $R_1$ stands for at least one halogenated hydrocarbon radical and at least one hydroxylated radical of the structural formula:

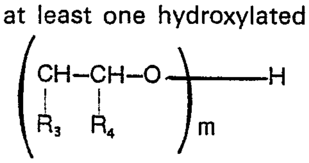

and $R_2$ stands for a radical of the structural formula:

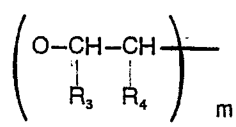

The substituents $R_3$ and $R_4$ respectively stand for a hydrogen atom or a hydrocarbon radical having from 1 to 6 carbon atoms and being halogen substituted, if desired, and m stands for a number between 1 and 10.

The method of preparing the compositions of the '732 patent comprises reacting a compound of the structural formula:

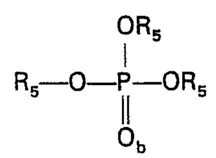

wherein $R_5$ is chloroethyl or 2,3-dibromopropyl and b is 0 or 1; in the presence of between 0.1 and 2 percent of a phosphorus acid stabilizer and between about 0.1 and 2 percent of disodium phosphate with a polyphosphoric acid or a mixture thereof with $P_2O_5$. A reaction mixture of partially esterified polyphosphoric acids is prepared by this step. The reaction mixture is then further reacted with an epoxide having the structural formula:

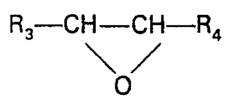

wherein $R_3$ and $R_4$ are as defined above; until said partially esterified polyphosphoric acids are completely esterified. The product is a reactive flame retardant having hydroxyl numbers from 100 to 300 milligrams of KOH per gram of product.

The present invention is concerned with methods for the preparation of compounds of the general formula

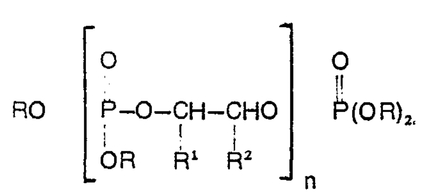

wherein R is $C_1$—$C_{10}$ alkyl or haloalkyl, $R^1$ and $R^2$ can be the same or different and are hydrogen or $C_1$—$C_{10}$ alkyl or haloalkyl and n is an integer from zero to 10, said compounds having a hydroxyl number from 1 to 25 milligrams of KOH per gram.

It is known that reactive flame retardants are undesirable for flexible polyurethane foams. They are detrimental to the flexibility of the foams and can cause other undesirable side effects to the foam properties.

In United Kingdom Patent No. 942,616 there are described certain oligomeric phosphates which fall within the formula given above. The oligomeric phosphates are disclosed as plasticizers which are used in the production of polyurethane foams, additionally to phosphorus-containing polyamides which are used as fire-retardant agents. There is disclosure of making these oligomeric phosphates by reacting phosphoric acid with a glycol, such as ethylene glycol or propylene glycol to form an acidic diester which is subsequently reacted with a halogenated monohydric alcohol in order to form the desired halogen-containing plasticizer.

In United States Patent 3817881 there are disclosed individual compounds of the formula given above wherein *a* is 1 which are flame retardants for polyurethane foam.

The object of the present invention is to provide a method for the preparation of oligomeric phosphate ester compositions which are mixtures of oligomers which may be defined by the general formula given above which method results in compositions of low reactivity, having hydroxyl numbers of the order of 1 to 25 milligrams of KOH per gram of product.

In accordance with the present invention flame retardant oligomeric phosphate esters having hydroxyl numbers from 1 to 25 milligrams of KOH per gram of product are prepared. These oligomers have excellent flame retardancy characteristics as additive flame retardants for flexible polyurethane foams. Their additive nature prevents damage to the physical characteristics of flexible polyurethane foams. Furthermore, their oligomeric nature substantially reduces leaching of the flame retardant from the foam; thereby obviating a common undesirable characteristic of non-oligomeric additive flame retardants.

The method of the present invention comprises first reacting $P_2O_5$ with a trialkyl or tris(haloalkyl) phosphate in the presence of 0.01% to 5% by weight of a phosphite at a temperature from 0°C. to 200°C. The reaction product is a mixed polyphosphate ester containing P—O—P bonds which is then reacted with an epoxide.

In a modification, $P_2O_5$ is first reacted with a trialkyl or tris(haloalkyl) phosphite at a temperature from 0°C. to 200°C. The reaction product is a mixed polyphosphate-polyphosphite ester containing P—O—P bonds; which is oxidised with air or oxygen to yield a polyphosphate ester having P—O—P bonds; which is then reacted with an epoxide. A Lewis acid catalyst or an alcohol or both are employed during the epoxide reaction to insure complete reaction of latent acidity groups. Volatile materials are removed following the epoxide reaction.

Exemplary R groups in the esters prepared according to the invention include but are not limited to the following:

$—CH_3$ $—CH_2CHBrCH_2Br$

$—C_2H_5$ $—CH_2CHClCH_2Cl$

$—C_nH_{2n+1}$; n=3—9

$—CH_2CH_2Cl$

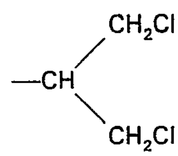

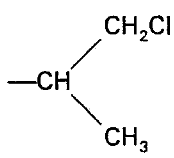

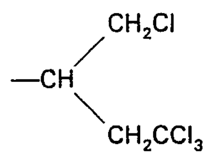

$—CH_2CH_2Br$

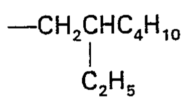

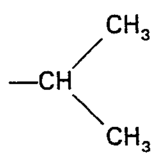

Exemplary $R^1$ and $R^2$ groups include but are not limited to the following:

| | | |
|---|---|---|
| $—H$ | $—CCl_3$ | $—CH_2CH_2Cl$ |
| $—CH_3$ | $—CH_2Br$ | $—CHClCH_2Cl$ |
| $—CH_2CH_3$ | $—CHBr_2$ | |
| $—CH_2Cl$ | $—CH_2CCl_3$ | |
| $—CHCl_2$ | $—CH_2CHCl_2$ | |

The method of preparing the oligomeric phosphate esters of the present invention comprises first reacting $P_2O_5$ with a trialkyl or tris(haloalkyl) phosphate having the structural formula:

(II) 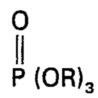

wherein R is the same as defined above.

This reaction is conducted at a temperature from 0°C. to 200°C. in the presence of 0.01% to 5% by weight of a phosphite having the structural formula:

(III) $P(OR)_3$

wherein R is the same as defined above.

Alternatively, $P_2O_5$ can be reacted with a trialkyl phosphite having the structural formula (III) at a temperature from 0°C. to 200°C. The product is then a mixed polyphosphate-polyphosphite ester having P—O—P bonds which is oxidized by reacting with air or oxygen at a temperature from 0°C. to 200°C.

The reaction product is a polyphosphate ester having P—O—P bonds which is then reacted at a temperature from 0°C. to 200°C with an excess of an epoxide having the structural formula:

(IV) 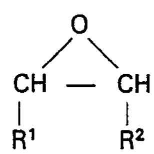

wherein $R^1$ and $R^2$ are the same as defined above. The excess epoxide insures complete reaction of all P—O—P bonds. This step can be carried out at elevated pressure to prevent loss of a volatile epoxide.

A Lewis acid catalyst or an alcohol or both are employed in amounts from 0.01% to 5% by weight during the epoxide reaction to insure complete reaction of latent acidity groups.

Suitable Lewis acid catalysts include but are not limited to the following:

| | |
|---|---|
| Aluminium chloride | Boron trifluoride etherate |
| Tetra (isopropyl) titanate | Boron trifluoride |
| Stannous octoate | Zinc chloride |
| Magnesium chloride | Antimony trichloride |
| Titanium tetrachloride | |

Suitable alcohols include but are not limited to the following:

$CH_3OH$ $CH_3(CH_2)_nOH$; n=2—10

$C_2H_5OH$ $(BrCH_2)_3CCH_2OH$

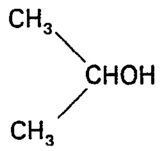 ØCH$_2$OH

Following the epoxide reaction, volatile materials are removed from the reaction product. This can be accomplished by vacuum stripping, nitrogen sparging, $CO_2$ sparging, dry air sparging, or combined vacuum and inert gas sparging.

The following equations (1) and (2) are representative of the reaction:

(1) 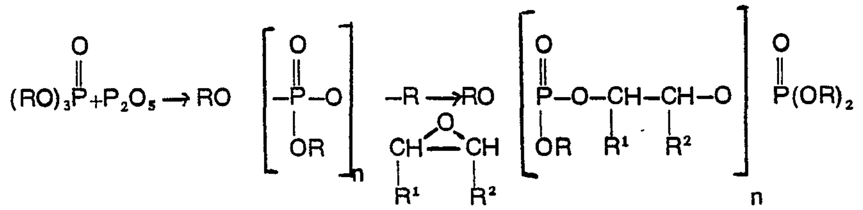

wherein R, $R^1$, $R^2$ and n are the same as defined above, or alternatively:

(2) 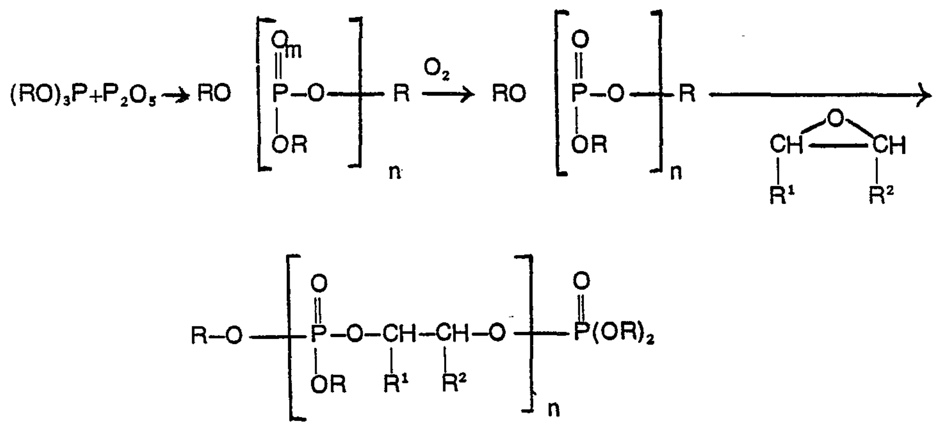

wherein R, $R^1$, $R^2$ and n are as defined above and m is 0 or 1.

Reactants utilized in the method described above are generally employed in suitable ratios to give a product with the desired %P, %Cl, viscosity, and oligomer composition. The ratio of $P_2O_5$ to trialkyl phosphate or tris(haloalkyl) phosphate, or alternately the ratio of $P_2O_5$ to trialkyl or tris(haloalkyl) phosphite, can be varied over a wide range. A variety of compositions can be prepared by altering the stoichiometry of reagents.

Reaction times can vary over relatively wide ranges and can easily be determined by one skilled in the art. Factors affecting reaction time include reactant and catalyst concentrations and temperature. Increases in temperature and catalyst concentration result in decreased reaction times. Typical reaction times are from 1 to 30 hours for each step.

The method described above can conveniently be effected by introducing the individual reactants and catalyst into any reaction zone that can be heated to the reaction temperature. The zone is generally provided with a condenser for removal of volatile components. A thermometer, thermocouple or other conventional means can be used to monitor temperature. The reaction can be carried out in a continuous or batch-type system as desired.

The products of the reaction are generally purified by removal of volatiles. This can be accomplished by conventional techniques.

The identification of products can be achieved by infrared spectra, $^1H$ nuclear magnetic resonance spectra and $^{31}P$ nuclear resonance spectra and elemental analysis.

A typical yield of the above-described method of the present invention is approximately 100% based on $P_2O_5$.

The hydroxyl number of the products is generally from 1 to 25 milligrams of KOH per gram of product. Accordingly, the products are essentially non-reactive in flexible urethane foams.

Illustrative of the compounds corresponding to structural formula (I) which can be prepared by the method of the present invention are:

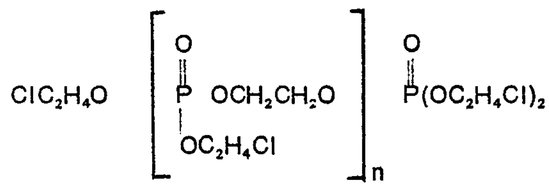

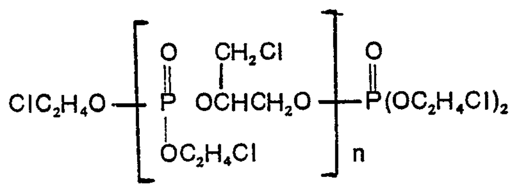

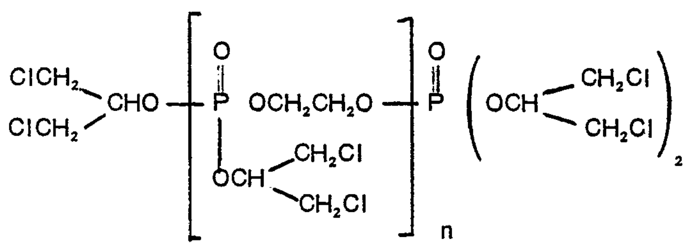

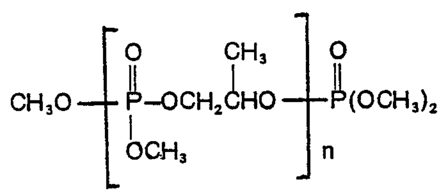

Where n is as defined above. Branched oligomers of the foregoing idealized structures may also be present.

The products of the present invention are useful for various flame retardant applications. They are particularly suited, however, for flame retarding flexible urethane foams.

The present invention will be more fully illustrated in the Examples 1 to 7 which follow:

Example 1

A reactor equipped with an agitator, thermometer, gas inlet and reflux condenser was charged with 1000 g of tris(2-chloroethyl) phosphate and 10 g of tris(2-chloroethyl) phosphite. The solution was warmed to 50°C. and 200 g of phosphorus pentoxide was added, with the exclusion of moisture and air. The slurry was then heated to 110—120°C. until the phosphorus pentoxide dissolved. Two grams of isopropyl alcohol was added, and ethylene oxide was introduced to the mixture at 110—120°C. until reaction ceased. This was indicated by strong reflux of ethylene oxide on a dry ice condenser. Two more grams of isopropyl alcohol and two grams of stannous octoate were added and ethylene oxide was introduced to the solution at 110—120°C. until the reaction ceased. The product was then stripped at 50°C. and 5 mm of Hg (68 kg $m^{-2}$), yielding 1457 g of a water white liquid with a viscosity of 1100 cps, 1.1 $m^{-1}kgs^{-1}$ (at 25°C.) and an acid number of 0.8 mg KOH/g. The product had a hydroxyl number of 12 mg KOH/g, and was found to contain 14.0% phosphorus and 24.5% chlorine.

Example 2

A reactor equipped with an agitator, thermometer, gas inlet and reflux condenser was charged with 1000 g of tris(2-chloroethyl) phosphate and 10 g of tris(2-chloroethyl) phosphite.

After 27 minutes of heating with the temperature at 50°C., 250 g of phosphorus pentoxide was added, with the exclusion of moisture and air.

The slurry was then heated to 115—120°C for 10 hours until the phosphorus pentoxide was dissolved. Ethylene oxide was then introduced to the mixture at 110—120°C. until reaction ceased. This was indicated by a strong reflux of ethylene oxide on the side of the condenser. Two grams of stannous octoate was added and ethylene oxide was introduced to the solution at 110—120°C until reaction ceased.

Another 2 g of stannous octoate and 2 g of isopropanol were then added and ethylene oxide was again introduced until reaction ceased. The total time used for ethylene oxide addition was 17 1/2 hours.

The product was then stripped at 60°C. and 2 mm of Hg for 90 minutes (27 kg $m^{-2}$).

1500 g of water white liquid with a viscosity of 2600 cps, 2.6 $m^{-1}kgs^{-1}$ (at 25°C.) and an acid number of 0.8 mg KOH/g was obtained. The product had a hydroxyl number of 13.5 mg KOH/g.

Example 3

A reactor equipped with an agitator, thermometer, gas inlet and reflux condenser was charged with 1250 g of tris(1,3-dichloro-2-propyl)phosphite. The solution was warmed to 130°C and 110 g of $P_2O_5$ was added. After 1 hour the $P_2O_5$ had dissolved and oxygen gas was bubbled through the solution at 125—135°C. over 3 hours. At this point 5 g of isopropyl alcohol was added, and ethylene oxide was introduced. After 4 hours, 2 g of stannous octoate was added and addition of ethylene oxide was resumed. After 4 more hours, 2 g of stannous octoate was again added, and the ethylene oxide reaction continued for another 2 hours. The product was cooled to 80°C and stripped at 1 mm of Hg (13 kg $m^{-2}$).

1450 g of a light yellow material with a viscosity of 34,000 cps, 34 $m^{-1}kgs^{-1}$ (at 25°C.) and an acid number of 1.4 mg KOH/g was obtained. The product was found to have a hydroxyl number of 8 mg KOH/g, and to contain 9.2% phosphorus and 37.5% chlorine.

Example 4

A reactor was charged with 600 pounds (270 kgs) of tris(2-chloroethyl) phosphate and 2.7 kgs of tris 2(chloroethyl) phosphite. The mixture was then heated over 75 minutes to 43°C.; and 54 kgs of phosphorus pentoxide was added. The slurry was heated at 108°C. for 10 hours. The batch was then cooled to 92°C over 1 hour; then 0.9 kg of tris(2-chloroethyl) phosphite was added. Over a 26 hour period a total of 73 kgs of ethylene oxide was added to the solution at 95—105°C. with addition of 1.08 kgs of stannous octoate and 2.16 kgs of isopropyl alcohol to facilitate the reaction. The batch was then cooled to 45°C. and volatiles were removed at 5 mm of Hg (68 kg $m^{-2}$) for 2 hours. A total of 377.5 kgs of almost water white product with a viscosity of 1030 cps, 1.03 $m^{-1}kgs^{-1}$ an acid number of 0.8 mg KOH/g and a hydroxyl number 10.5 mg KOH/g was obtained. The product was found to contain 13.8% phosphorus and 26.7% chlorine.

Example 5

A reactor equipped with an agitator, thermometer, gas inlet and reflux condenser was charged with 1300 g of tris(1,3-dichloro-2-propyl)phosphate and 5 g of tris(2-chloroethyl) phosphite. With the temperature at 25°C., 175 g of phosphorus pentoxide was added with the exclusion of moisture and air.

The slurry was then heated for 4 hours at 80°C. A brown discolouration appeared and 5 grams more of tris(2-chloroethyl) phosphite was added to the system. The system was then heated for an additional 2 1/2 hours at 100—110°C until the phosphorus pentoxide dissolved.

Two grams of isopropyl alcohol was added and ethylene oxide was introduced to the mixture at 110—120°C, until reaction ceased. This was indicated by a strong reflux of ethylene oxide on a dry ice condenser. Two more grams of isopropanol and 2 g of stannous octoate were added and ethylene oxide was introduced to the solution at 110—120°C. until the reaction ceased.

The product was then stripped at 40°C. and 4 mm of Hg (54 kg $m^{-2}$), yielding 1645 g of a pale orange liquid with a viscosity of 28,000 cps, 28 $m^{-1}kgs^{-1}$ (at 25°C.) and an acid number of 0.8 mg KOH/g. The product has a hydroxyl number of 17.2 mg KOH/g and was found to contain 10.1% phosphorus and 37% chlorine.

Example 6

A reactor equipped with an agitator, thermometer, gas inlet and reflux condenser was charged with 800 g of tris(2-chloroethyl)phosphate, 400 g of tris(1,3-dichloro-2-propyl)phosphate and 10 g of tris(2-chloroethyl)phosphite. With the temperature at 27°C., 80 g of phosphorus pentoxide was added with the exclusion of air and moisture.

The slurry was then heated for 2 1/2 hours. Ethylene oxide was introduced to the mixture at 110—120°C. until reaction ceased. This was indicated by a strong reflux of ethylene oxide in the condenser.

Two grams of isopropyl alcohol and 2 g of stannous octoate were added and ethylene oxide was introduced to the mixture at 110—120°C. until the reaction ceased.

Two more grams of stannous octoate and 2 g of isopropanol were then added and ethylene oxide was introduced to the solution at 110—120°C. until the reaction ceased.

The product was then stripped at 40°C. and 1 mm Hg (13 kg $m^{-2}$), yielding 1340 g of a water white product with a viscosity of 1050 cps, 1.05 $m^{-1}kgs^{-1}$ (at 25°C.) an acid number of 0.84 mg KOH/g and an hydroxyl number of 9.5 mg KOH/g. The product was found to contain 10.6% phosphorus and 35.8% chlorine.

## Example 7

A reactor equipped with an agitator, thermometer, gas inlet and reflux condenser was charged with 550 g of tris(1,3-dichloro-2-propyl)phosphate, 800 g of tris(2-chloroethyl)phosphate and 10 g of tris(2-chloroethyl)phosphite. With the temperature at 25°C., 160 g of phosphorus pentoxide was added with the exclusion of moisture and air.

The slurry was then heated at 115—120°C. for 6 hours until the phosphorus pentoxide had dissolved. Two grams of isopropyl alcohol was added and ethylene oxide was introduced to the mixture at 110—120°C. until reaction ceased. This was indicated by a strong reflux of ethylene oxide in a dry ice condenser.

Two more grams of isopropanol and 2 g of stannous octoate were added and ethylene oxide was introduced to the solution at 110—120°C. until the reaction ceased.

Another 2 g of stannous octoate was added and ethylene oxide was introduced to the solution at 110—120°C. until the reaction ceased.

The product was then stripped at 50°C. and 2 mm/Hg (27 kg $m^{-2}$), yielding 1666 g of an almost water white product with a viscosity of 1050 cps, 1.05 $m^{-1}kgs^{-1}$ (at 25°C.) and an acid number of 1.12 mg KOH/g and an hydroxyl number of 95 mg KOH/g. The product was found to contain 11.6% phosphorus and 32.9% chlorine.

## Example 8

The composition prepared pursuant to Example 5 was incorporated at 9 p.h.r. into a flexible polyurethane foam having the following formulation:

| | Parts by weight |
|---|---|
| oxypropylated glycerin | 100.0 |
| silicone surfactant | 1.0 |
| triethylenediamine catalyst | 0.1 |
| N-ethyl morpholine | 0.2 |
| water | 4.0 |
| stannous octoate catalyst | 0.2 |
| tolylene diisocyanate | 50.67 |

The foam mixture was poured into an open-top box and allowed to expand into a 38 centimetre square block. It was then oven cured at 130°C. for about 10 minutes. This was followed by ambient temperature curing for 3 days.

Flamability testing was conducted pursuant to the California Vertical burn test and Motor Vehicle Safety Standard 302 (MVSS-302). A control foam of the same formulation without the flame retardant was also prepared and tested for flamability.

Particulars on the California Vertical burn test are available from the State of California in Technical Information Bulletin 117. In the MVSS-302 test, a specimen of foam 10 × 1.25 cms thick by 35.5 cms is held horizontally between two U-shaped brackets which allow free access of air above and below. The specimen is ignited by a bunsen burner and the burning rate in centimetres per minute is measured. A burn rate below 10 cms/min is usually required.

General Motors Corporation uses the following qualitative measures under MVSS-302:

| | |
|---|---|
| Does not ignite | DNI |
| Self extinguishes (SE) before first mark (before 3.75 cms total) | SE |
| SE in less than 8.75 cms total | SE/NBR |
| SE after 8.75 cms from starting point | SE, $\alpha$ burn rate |
| Burns full length | burn rate |

The flamability results were as follows:

| | CONTROL | FLAME RETARDED FOAM |
|---|---|---|
| MVSS-302 | | |
| INITIAL RATING | BURN | SE/NBR |
| Avg Cms Burned | 29.21 | 3.70 |
| Avg Sec Burned | 130.00 | 0.50 |
| Burn Rate | 11.76 | |
| DHA* RATING | BURN | SE/NBR |
| Avg Cms Burned | 22.31 | 2.92 |
| Avg Sec Burned | 107.89 | |
| Burn Rate | 12.49 | |
| CALIF. VERTICAL | | |
| INITIAL RATING | FAIL | PASS |
| Avg Cms Burned | 30.48 | 6.22 |
| Avg Sec Burned | 9.20 | |
| DHA* RATING | FAIL | PASS |
| Avg Cms Burned | 30.48 | 7.00 |
| Avg Sec Burned | 9.60 | |

*Dry heat aging for 22 hours at 140°C.

Example 9

The composition prepared pursuant to Example 6 was incorporated at 10 p.h.r. into a flexible polyurethane foam having the same formulation and physical characteristics as that described in Example 8. The control foam of Example 8 was used as a reference.

Flamability testing results were as follows:

| | CONTROL | FLAME RETARDED FOAM |
|---|---|---|
| MVSS-302 | | |
| INITIAL RATING | BURN | SE/NBR |
| Avg Cms Burned | 29.21 | 3.02 |
| Avg Sec Burned | 130.00 | |
| Burn Rate | 11.76 | |
| DHA RATING | BURN | SE/NBR |
| Avg Cms Burned | 22.31 | 3.35 |
| Avg Sec Burned | 107.80 | 0.20 |
| Burn Rate | 12.49 | |
| CALIF. VERTICAL | | |
| INITIAL RATING | FAIL | PASS |
| Avg Cms Burned | 30.48 | 5.46 |
| Avg Sec Burned | 9.20 | |
| DHA RATING | FAIL | PASS |
| Avg Cms Burned | 30.48 | 6.47 |
| Avg Sec Burned | 9.60 | |

**Claims**

1. A method of preparing an oligomeric phosphate ester composition of the structural formula

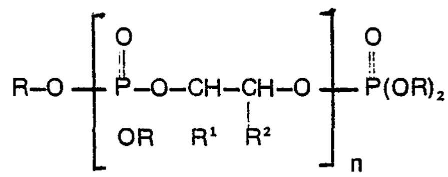

wherein R is $C_1$—$C_{10}$ alkyl or $C_1$—$C_{10}$ haloalkyl; $R^1$ and $R^2$ are the same or different and are hydrogen, $C_1$—$C_{10}$ alkyl or $C_1$—$C_{10}$ haloalkyl and n is an integer from zero to 10; characterised in that one first reacts $P_2O_5$ with a trialkyl or tris(haloalkyl)phosphate of the structural formula:

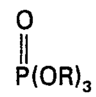

wherein R is the same as defined above, at a temperature from 0°C. to 200°C. in the presence of 0.01% to 5% by weight of a phosphite of the structural formula:

$$P(OR)_3$$

wherein R is as defined above; and then reacts the intermediate produced by the first reaction with an excess of an epoxide of the structural formula:

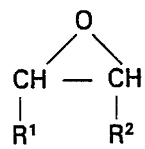

wherein $R^1$ and $R^2$ are as defined above, at a temperature from 0°C. to 200°C., in the presence of 0.01% to 5% by weight of a Lewis acid catalyst, an alcohol, or a Lewis acid catalyst and an alcohol; followed by removal of volatile materials; whereby a composition having an hydroxyl number of from 1 to 25 milligrams of KOH per gram results.

2. A method of preparing oligomeric phosphate ester compositions as defined in claim 1 characterised in that one first reacts $P_2O_5$ with a trialkyl or tris(haloalkyl)phosphite of the structural formula:

$$P(OR)_3$$

wherein R is as defined in claim 1, at a temperature from 0°C. to 200°C; and then oxidises the first intermediate produced by the first reaction with air or oxygen at a temperature from 0°C. to 200°C; to produce a second intermediate; and then reacts the second intermediate with an excess of an epoxide of the structural formula:

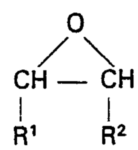

wherein $R^1$ and $R^2$ are as defined above, at a temperature from 0°C. to 200°C. in the presence of 0.01% to 5% by weight of a Lewis acid catalyst, an alcohol or a Lewis acid catalyst and an alcohol; followed by removal of volatile material; whereby a composition having an hydroxyl number of from 1 to 25 milligrams of KOH per gram results.

3. A process as claimed in claim 1 or claim 2 characterised in that compounds are used in which R is selected from methyl, ethyl, 2-chloroethyl, 2-chloro-1-methylethyl, 2-chloro-1-chloromethylethyl, 2-3-dichloropropyl, 2-bromoethyl, and 2,3-dibromopropyl.

4. A process as claimed in any of claims 1 to 3 characterised in that an epoxide is used in which $R^1$ and $R^2$ are the same or different and are selected from hydrogen, methyl, ethyl, propyl, chloromethyl, 2-chloroethyl, 2,2- or 1,2-dichloroethyl, and bromomethyl.

**Revendications**

1. Procédé de préparation de compositions d'esters phosphates oligomères de la formule développée:

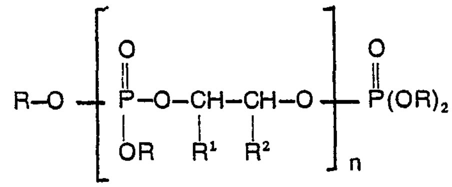

dans laquelle R est un groupe alcoyle en $C_1$—$C_{10}$ ou halogéno-alcoyle en $C_1$—$C_{10}$; $R^1$ et $R^2$ sont identiques ou différents et sont de l'hydrogène ou des groupes alcoyle en $C_1$—$C_{10}$ ou halogéno-alcoyle en $C_1$—$C_{10}$ et n est un nombre entier de zéro à 10; caractérisé en ce qu'on fait réagir d'abord $P_2O_5$ avec un phosphate de trialcoyle ou de tris(halogéno-alcoyle) de la formule de constitution:

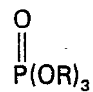

dans laquelle R est tel que défini ci-dessus, à une température comprise entre 0°C et 200°C, en présence de 0,01% à 5% en poids d'un phosphite de la formule de constitution:

$$P(OR)_3$$

dans laquelle R est tel que défini ci-dessus; et ensuite on fait réagir le produit intermédiaire formé par la première réaction avec un excès d'un époxyde de la formule développée:

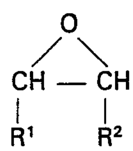

dans laquelle $R^1$ et $R^2$ sont tels que définis ci-dessus, à une température comprise entre 0°C et 200°C, en présence de 0,01% à 5% en poids d'un catalyseur acide de Lewis, d'un alcool ou d'un catalyseur acide de Lewis et d'un alcool; cela étant suivi de l'élimination des matières volatiles; de manière qu'il en résulte une composition ayant un indice d'hydroxyle compris entre 1 et 25 milligrammes de KOH par gramme.

2. Procédé selon la revendication 1, caractérisé en ce qu'on fait réagir d'abord $P_2O_5$ avec un phosphite de trialcoyle ou de tris(halogéno-alcoyle) de la formule de constitution:

$$P(OR)_3$$

dans laquelle R est tel que défini dans la revendication 1, à une température comprise entre 0°C et 200°C; et ensuite on oxyde le premier produit intermédiaire formé par la première réaction au moyen d'air ou d'oxygène à une température comprise entre 0°C et 200°C, de manière à former un deuxième produit intermédiaire; et ensuite on fait réagir le deuxième produit intermédiaire avec un excès d'un époxyde de la formule développée:

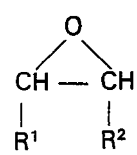

dans laquelle $R^1$ et $R^2$ sont tels que définis ci-dessus, à une température compris entre 0°C et 20°C en présence de 0,01% à 5% en poids d'un catalyseur acide de Lewis, d'un alcool ou d'un catalyseur acide de Lewis et d'un alcool; cala étant suivi de l'élimination des matières volatiles; de manière qu'il en résulte une composition ayant un indice d'hydroxyle compris entre 1 et 25 milligrammes de KOH par gramme.

3. Procédé selon l'une des revendications 1 et 2, caractérisé en ce qu'on utilise des composés dans lesquels R est choisi parmi les groues méthyle, éthyle, 2-chloroéthyle, 2-chloro-1-méthyléthyle, 2-chloro-1-chlorométhyléthyle, 2,3-dichloropropyle, 2-bromoéthyle et 2,3-dibromopropyle.

4. Procédé selon l'une quelconque des revendications 1 à 3, caractérisé en ce qu'on utilise un époxyde dans lequel $R^1$ et $R^2$ sont identiques ou différents et sont choisis parmi l'hydrogène et les groupes méthyle, éthyle, propyle, chlorométhyle, 2-chloroéthyle, 2,2- ou 1,2-dichloroéthyle et bromoéthyle.

**Patentansprüche**

1. Verfahren zur Herstellung einer oligomeren Phosphatesterzusammensetzung der Strukturformel:

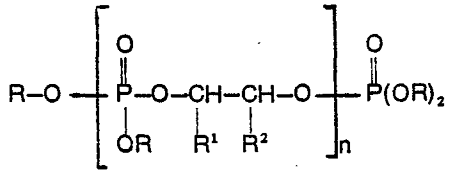

worin R für $C_1$—$C_{10}$-Alkyl oder $C_1$—$C_{10}$-Halogenalkyl steht, $R^1$ und $R^2$ gleich oder verschieden sind und für Wasserstoff, $C_1$—$C_{10}$-Alkyl oder $C_1$—$C_{10}$-Halogenalkyl stehen und n eine ganze Zahl von 0 bis 10 ist, dadurch gekennzeichnet, daß man zuerst $P_2O_5$ mit einem Trialkyl- oder Tris-(halogenalkyl)-phosphat der Strukturformel:

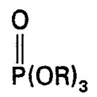

worin R die obige Definition hat, bei einer Temperatur von 0 bis 200°C in Gegenwart von 0,01 bis 5 Gew.-% eines Phosphits der Strukturformel:

$$P(OR)_3$$

worin R die obige Definition hat, umsetzt, und sodann das durch die erste Reaktion gebildete Zwischenprodukt mit einem Überschuß eines Epoxids der Strukturformel:

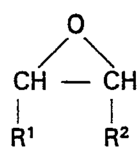

worin $R^1$ und $R^2$ die obige Definition haben, bei einer Temperatur von 0 bis 200°C in Gegenwart von 0,01 bis 5 Gew.-% eines Lewis-Säurekatalysators, eines Alkohols oder eines Lewis-Säurekatalysators und eines Alkohols umsetzt und anschließend flüchtige Materialien entfernt, wodurch eine Zusammensetzung mit einer Hydroxyzahl von 1 bis 25 mg KOH/g erhalten wird.

2. Verfahren zur Herstellung von oligomeren Phosphatesterzusammensetzungen nach Anspruch 1, dadurch gekennzeichnet, daß man zuerst $P_2O_5$ mit einem Trialkyl- oder Tris-(halogenalkyl)-phosphit der Strukturformel:

$$P(OR)_3$$

worin R die Definition gemäß Anspruch 1 hat, bei einer Temperatur von 0 bis 200°C umsetzt und sodann das durch die erste Reaktion gebildete Zwischenprodukt mit Luft oder Sauerstoff bei einer Temperatur von 0 bis 200°C oxidiert, um ein zweites Zwischenprodukt zu erhalten, und sodann das zweite Zwischenprodukt mit einem Uberschuß eines Epoxids der Strukturformel:

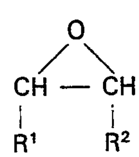

worin $R^1$ und $R^2$ die obigen Definitionen haben, bei einer Temperatur von 0 bis 200°C in Gegenwart von 0,01 bis 5 Gew.-% eines Lewis-Säurekatalysators, eines Alkohols oder eines Lewis-Säurekatalysators und eines Alkohols umsetzt und anschließend flüchtiges Material entfernt, wodurch eine Zusammensetzung mit einer Hydroxylzahl von 1 bis 25 mg KOH/g erhalten wird.

3. Verfahren nach Anspruch 1 oder 2, dadurch gekennzeichnet, daß man Verbindungen verwendet, bei denen R aus Methyl, Äthyl, 2-Chloräthyl, 2-Chlor-1-methyläthyl, 2-Chlor-1-chlormethyläthyl, 2,3-Dichlorpropyl, 2-Bromäthyl und 2,3-Dibrompropyl ausgewählt ist.

4. Verfahren nach einem der Ansprüche 1 bis 3, dadurch gekennzeichnet, daß man ein Epoxid verwendet, bei dem $R^1$ und $R^2$ gleich oder verschieden sind und aus Wasserstoff, Methyl, Äthyl, Propyl, Chlormethyl, 2-Chloräthyl, 2,2- oder 1,2-Dichloräthyl und Brommethyl ausgewählt sind.